(19) Europäisches Patentamt / European Patent Office / Office européen des brevets

(11) **EP 2 535 586 B1**

(12) **EUROPEAN PATENT SPECIFICATION**

(45) Date of publication and mention
of the grant of the patent:
**30.08.2017 Bulletin 2017/35**

(51) Int Cl.:
***F04B 35/04*** *(2006.01)*    ***F04B 41/06*** *(2006.01)*
***F04B 49/06*** *(2006.01)*

(21) Application number: **12164122.9**

(22) Date of filing: **13.04.2012**

(54) **Machine including compressor controlling apparatus and method**

Maschine mit Verdichtersteuervorrichtung und Verfahren

Machine comportant un appareil et un procédé de commande de compresseur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2011 KR 20110057050**

(43) Date of publication of application:
**19.12.2012 Bulletin 2012/51**

(73) Proprietor: **LG Electronics Inc.
Seoul 150-721 (KR)**

(72) Inventors:
• **Yoo, Jaeyoo**
  **Seoul (KR)**
• **Nah, Taewoong**
  **Seoul (KR)**

(74) Representative: **Vossius & Partner
Patentanwälte Rechtsanwälte mbB
Siebertstrasse 3
81675 München (DE)**

(56) References cited:
GB-A- 2 246 451        US-A1- 2005 123 407
US-A1- 2007 056 300

EP 2 535 586 B1

## Description

The present disclosure relates to machines including a compressor controlling apparatus for controlling at least two compressors by using, for example, an inverter, and a controlling method thereof.

In general, a compressor is a device for converting mechanical energy into compression energy of a compressive fluid, and is used in various machines. For example, machines using a compressor include a refrigerator, an air-conditioner, or the like.

The compressor may be divided into a reciprocating compressor, a rotary compressor, and a scroll compressor. In the reciprocating compressor, a compression space is formed between a piston and a cylinder, in which operation gas is sucked into or discharged from, and the piston linearly and reciprocally moves within the cylinder to compress refrigerant. In the rotary compressor, a compression space is formed between an eccentrically rotating roller and a cylinder, in which operation gas is sucked into or discharged from, and the roller eccentrically rotates along an inner wall of the cylinder to compress refrigerant. In the scroll compressor, a compression space is formed between an orbiting scroll and a fixed scroll, in which operation gas is sucked into or discharged from, and the orbiting scroll rotates along the fixed scroll to compress refrigerant.

The reciprocating compressor sucks, compresses, and discharges the refrigerant by linearly and reciprocally moving the internal piston within the cylinder. The reciprocating compressor may be divided into a recipro-type reciprocating compressor and a linear type reciprocating compressor according to how a piston is driven.

The recipro-type reciprocating compressor couples a crank shaft to a motor that rotates and couples a piston to the crank shaft to convert a rotational movement of a motor into a linear, reciprocal movement. Meanwhile, the linear type reciprocating compressor connects a piston to an actuator of a motor that linearly moves and reciprocates the piston by the linear movement of the motor.

The reciprocating compressor includes an electric motor unit generating driving force and a compression unit compressing a fluid upon receiving the driving force from the electric motor unit. As the electric motor unit, generally, a motor is commonly used, and the linear type reciprocating compressor uses a linear motor.

The linear motor directly generates linear driving force by itself, without the need of a mechanical conversion device, and thus its structure is not complicated. Also, the linear motor can reduce loss resulting from energy conversion, and since it does not have a connection portion which may cause a frictional contact or may be abraded, noise can be considerably reduced. Also, when the linear type reciprocating compressor (referred to as a 'linear compressor', hereinafter) is used, for example, in a refrigerator or an air-conditioner, a compression ratio can be changed by changing a stroke voltage applied to the linear compressor, so that it can be used to control varying a cooling capacity.

Meanwhile, in the reciprocating compressor, in particular, in the linear compressor, the piston reciprocally moves without being mechanically restrained, so if a voltage is abruptly excessively applied, the piston may collide with a wall of the cylinder or the piston may not advance due to a large load, thereby failing to properly perform compression. Thus, a controlling apparatus for controlling the operation of the piston with respect to the change in the load or the voltage is desirable.

As an example, a compressor controlling apparatus detects voltage and current applied to a compressor motor and estimates a stroke according to a stroke sensorless method to perform feedback controlling. At this time, the compressor controlling apparatus uses a triac or an inverter in order to control a compressor. The compressor controlling apparatus employing an inverter controls only a single compressor by using a single inverter.

US 2007/0056300 A1 discloses a capacity control algorithm for a multiple compressor liquid chiller system, wherein the speed and number of compressors in operation are controlled in order to obtain a leaving liquid temperature setpoint.

GB 2 246 451 A discloses a heat exchanger circuit including a rotary compressor having two compressor pumps and a motor for driving the compressor pumps, a condenser, a regulator and an evaporator, wherein an inverter circuit powers the motor, the output frequency of the inverter circuit being controlled by a frequency controlling device according to a heat load of the heat exchange circuit.

US 2005/0123407 A1 describes a system for attenuating noise in at least two positive displacement compressors proximately located from each other for use with at least one heating or cooling system.

The present invention is defined by the features of independent claims 1 and 14. The dependent claims describe embodiments of the present invention.

An aspect of the disclosure provides a machine including a compressor controlling apparatus and method capable of separately or simultaneously operating at least two compressors by using an inverter.

Another aspect of the disclosure provides a machine including a compressor controlling apparatus and method capable of separately detecting currents and voltages applied to motors of at least two compressors and estimating strokes of the respective compressors to separately control the strokes or frequencies of the at least two compressors.

In another aspect of the disclosure, there is provided a machine including a compressor controlling apparatus including: an inverter including a plurality of switching elements and to switch direct current (DC) power into driving power for at least one of the first compressor and the second compressor according to a control signal; and a controller to generate the control signal for switching the plurality of switching elements and outputting the control signal to the inverter.

In another aspect, there is provided machine including a compressor controlling device including: a converter converting alternating current (AC) power into DC power; a smoothing unit smoothing the DC power; at least three inverter modules, at least one or more of the three inverter modules including two switching elements converting the smoothed DC power into compressor driving power according to a driving signal that activates one or more switching elements in the at least one or more of the three inverter modules to output the compressor driving power; a driving unit switched according to a control signal to generate the driving signal that activates one or more of the respective switching elements; and a controller generating the control signal according to received information regarding a state of the first and second compressors.

The machine including a compressor controlling apparatus according to the foregoing embodiments may simultaneously operate first and second compressors or separately operate the first and second compressors.

The machine including a compressor controlling apparatus according to the foregoing embodiments may further include: first and second current detection units detecting a compressor motor current applied to the motors provided in the respective first and second compressors; and first and second voltage detection units detecting a compressor motor voltage applied to each of the motors.

The machine including a compressor controlling apparatus according to the foregoing embodiments may further include: first and second stroke calculation units calculating first and second strokes of the first and second compressors by using the compressor motor current and the compressor motor voltage.

According to the embodiments of the disclosure, since the operation of two compressors is controlled by using a single inverter, the use of elements is minimized, the compressor capacity can be increased, and the operation efficiency of the system can be enhanced.

Also, according to the embodiments of the disclosure, a plurality of operation modes can be used according to a load or cooling capacity of the two compressors. Also, since two compressors are separately or simultaneously operated by using the single inverter, the configuration of the system can be simplified and the cost can be reduced.

The foregoing and other objects, features, aspects and advantages of the present invention will become more apparent from the following detailed description of the present invention when taken in conjunction with the accompanying drawings.

FIG. 1 is a view schematically showing a compressor controlling apparatus according to an embodiment of the present invention;

FIG. 2 is a view schematically showing a compressor controlling apparatus according to another embodiment of the present invention;

FIGS. 3 and 4 are views explaining a controlling operation of a first compressor among two compressors according to an embodiment of the present invention;

FIGS. 5 and 6 are views explaining a controlling operation of a second compressor among the two compressors according to an embodiment of the present invention;

FIGS. 7A through 8B are views explaining simultaneously operating two compressors according to an embodiment of the present invention; and

FIG. 9 is a flow chart schematically illustrating a compressor controlling method according to an embodiment of the present invention.

Embodiments of the present invention relate to a machine including a compressor controlling apparatus for controlling a stroke, a voltage, or a frequency of a compressor motor. The compressor controlling apparatus according to embodiments of the present invention simultaneously operates first and second compressors or individually operates the first and second compressors by using a single inverter.

First, the configuration of a reciprocating compressor, in particular, a linear compressor, to which the compressor controlling apparatus according to one or more embodiments of the present invention are applicable, will be briefly described. Here, some of the components in the configuration of the linear compressor may be modified or deleted, or any other components may be added.

In a linear compressor, an inlet pipe and an outlet pipe, to or from which refrigerant is introduced or discharged, are installed at one side of a hermetic container, and a cylinder is fixed within the hermetic container. In order to compress refrigerant sucked into a compression space within the cylinder, a piston is installed to reciprocally and linearly move within the cylinder. Also, springs are installed in a direction in which the piston moves, and supported by elastic force. The piston is connected with a linear motor generating linear reciprocal driving force, and the linear motor controls a stroke of the piston to change compression capacity. A suction valve is installed at one end of the piston in contact with the compression space, and a discharge valve assembly is installed at one end of the cylinder in contact with the compression space. Here, the suction valve and the discharge valve assembly are automatically controlled to open and close according to internal pressure of the compression space. The interior of the hermetic container is hermetically sealed as upper and lower shells are coupled together, and the inlet pipe to which a refrigerant flows and the outlet pipe from which the refrigerant flows out are installed at one side of the hermetic container. The piston is elastically supported in the direction in which the piston moves reciprocally and linearly within the cylinder. A linear motor is assembled to an outer side of the cylinder by a frame to constitute an assembly. The assembly is elastically supported by an inner bottom surface of the hermetic container by means of a support spring. Certain oil exists on the inner bottom surface of the hermetic container. An oil supply device for pumping oil is installed at a lower side of the assembly within the frame, and an oil supply pipe for supplying oil between the piston and cylinder is formed within the frame at a lower side of the assembly. The oil supply device may pump oil upon being operated by reciprocation generated as the piston reciprocally and linearly moves. The oil is supplied to a gap between the piston and the cylinder along the oil supply pipe, thereby performing a cooling and lubricating operation.

The cylinder is formed to have a hollow shape to allow the piston to reciprocally and linearly move therein, and the compression space is formed at one side of the cylinder. One end of the cylinder is positioned to be close within the inlet pipe and installed on the same straight line as the inlet pipe. Of course, the piston is installed to reciprocally and linearly move (or to make a reciprocal or linear movement) at the inner side of the cylinder close to the inlet pipe, and the discharge valve assembly is installed at one end opposed to the inlet pipe. The discharge valve assembly includes a discharge cover forming a certain discharge space of the cylinder, a discharge valve opening and closing one end of the compression space side of the cylinder, and a valve spring, which may be a type of coil spring, providing elastic force in an axial direction and formed between the discharge cover and the discharge valve. Here, an O-ring is provided at the inner circumference of one end of the cylinder, and the discharge valve is tightly attached to one end of the cylinder. A loop pipe formed to be bent is connected between one side of the discharge cover and the outlet pipe. The loop pipe guides compressed refrigerant so as to be discharged to the outside, and buffers transmission of vibration to the entire hermetic container according to interaction of the cylinder, piston, and the linear motor. A refrigerant flow path is formed at the piston to allow refrigerant introduced from the inlet pipe to flow therealong. One end of the piston close to the inlet pipe is directly connected to the linear motor by a connection member, and a suction valve is installed at one end of the piston at the opposite side of the inlet pipe, and the piston is installed to be elastically supported by various springs in the movement direction of the piston. Here, the suction valve has a shape of a thin film plate and is formed such that a central portion thereof is partially cut to open and close the refrigerant flow path of the piston. One side of the suction valve is fixed at one end of the piston by a screw.

When the pressure in the compression space is lower than a certain suction pressure and lower than a discharge pressure according to the reciprocal, linear movement of the piston within the cylinder, the suction valve is opened to allow the refrigerant to be sucked into the compression space, and when the pressure in the compression space is higher than the certain suction pressure, the suction valve is closed and the refrigerant in the compression space is compressed.

The linear motor includes an inner stator configured by laminating a plurality of laminations in a circumferential direction and fixedly installed at an outer side of the cylinder by a frame, an outer stator configured by laminating a plurality of laminations in a circumferential direction in the vicinity of a coil winding body configured to allow coil to be wound therearound, and installed to be spaced apart from the inner stator at an outer side of the cylinder by a frame, and a permanent magnet positioned at a space between the inner stator and the outer stator and connected to the piston by a connection member. Here, the coil winding body may be fixed to an outer side of the inner stator. In the linear motor, when a current is applied to the coil winding body, electromagnetic force is generated, which causes the permanent magnet to reciprocally and linearly move according to interaction of the generated electromagnetic force and the permanent magnet, and the piston connected with the permanent magnet reciprocally and linearly moves within the cylinder.

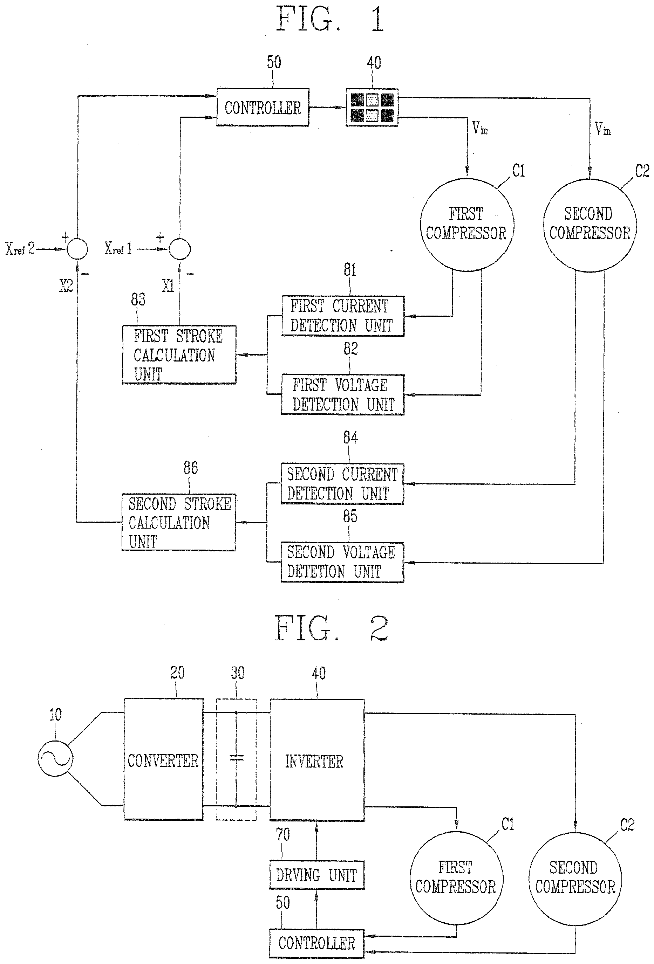

With reference to FIG. 1, a compressor controlling apparatus according to an embodiment of the present invention includes a single inverter 40 having a plurality of switching elements and converting DC power into compressor driving power according to a control signal, and a controller 50 generating a control signal for driving the plurality of switching elements and outputting the control signal to the inverter 40. The compressor controlling apparatus according to an embodiment of the present invention may simultaneously operate a first compressor C1 and a second compressor C2 or separately operate the first and second compressors. This may be simply defined as a compressor operation mode. The compressor mode is an operation mode determined by a load or a required cooling capacity of the first and second compressors. The compressor operation mode may be an operation mode for controlling by discriminating strokes, frequencies, or the like, of the respective compressors by a certain value. In the present embodiment, the compressor operation mode may be divided into a separate operation mode of the first compressor, a separate operation mode of the second compressor, and a simultaneous operation mode of the first and second compressors. Here, the control signal is generally a pulse width modulation (PWM) signal for controlling a PWM voltage duty with respect to the switching elements of the inverter 40.

With reference to FIG. 2, a compressor controlling apparatus according to another embodiment of the present invention includes a converter 20 converting commercial AC power 10 into DC power, a smoothing unit 30 smoothing DC power, an inverter 40 having three inverter modules each comprised of two switching elements, converting the smoothed DC power into compressor driving power according to a driving signal with respect to each switching element, and outputting the same, a driving unit 70 switched according to a control signal to generate driving signals with respect to the switching elements; and a controller 50 generating the control signal according to information regarding a state of the first compressor and the second compressor. The compressor controlling apparatus may simultaneously operate the first and second compressors and separately or individually operate the first and second compressors. Here, in general, the control signal may be a PWM signal for controlling a PWM voltage duty with respect to the switching elements of the inverter 40.

Although not shown in FIG. 2, with reference to FIG. 1, the compressor controlling apparatuses according to one or more embodiments of the present invention may include a first current detection unit 81 for detecting a compressor motor current applied to a compressor motor provided in the first compressor C1 and a first voltage detection unit 82 detecting a compressor motor voltage applied to the compressor motor. Also, the compressor controlling apparatuses according to one or more embodiments of the present invention may further include a second current detection unit 84 for detecting a compressor motor current applied to a compressor motor provided in the second compressor C2 and a second voltage detection unit 85 detecting a compressor motor voltage applied to the compressor motor.

The first and second current detection units 81 and 84 detect a driving current applied to the compressor according to a load of the compressor or a load of a refrigerating system, for example. The current detection units 81 and 84 detect a motor current applied to the compressor motor. The first and second voltage detection units 82 and 85 detect a driving voltage applied to the compressor. The voltage detection units 82 and 85 detect a motor voltage applied to both ends of the compressor motor according to a load of the compressor.

Although not shown in FIG. 2, with reference to FIG. 1, when the compressor is a reciprocating compressor, such as a linear compressor, the compressor controlling apparatuses according to one or more embodiments of the present invention further include first and second stroke calculation units 83 and 86 calculating first and second stroke of the first and second compressors by using the compressor motor current and the compressor motor voltage. The relationship among the motor voltage, the motor current, and the strokes is as follows. The first and second stroke calculation units 83 and 86 may calculate strokes by using Equation 1 shown below based on the motor voltages detected through the first and second voltage detection units 82 and 85 and the motor currents detected through the first and second current detection units 81 and 84.

[Equation 1]

$$x = \frac{1}{\alpha} \int (Vm - Ri - L\frac{di}{dt})dt$$

Here, x is a stroke, $\alpha$ is a motor constant, Vm is motor voltage, R is resistance, L is inductance, and i is motor current.

The controller 50 receives a first stroke reference value xref1 and compares a first stroke estimate value x1 calculated by the first stroke calculation unit 83 and a first stroke reference value. Upon comparing the first stroke estimate value and the first stroke reference value, the controller 50 generates a control signal according to the comparison results. Also, the controller 50 receives a second stroke reference value (or first stroke reference value) xref2 and compares a second stroke estimate value x2 calculated by the second stroke calculation unit 86 and a second stroke reference value. Upon comparing the second stroke estimate value and the second stroke reference value, the controller 50 generates a control signal according to the comparison results. The driving unit 70 selects switching elements connected to the first compressor or switching elements connected to the second compressor according to the control signals, and generates corresponding driving signals. The driving unit 70 is a switching circuit or element for switching the switching elements within the inverter. The compressor controlling apparatuses according to one or more embodiments of the present invention perform sensorless controlling, and a detailed description thereof will be omitted.

The compressor controlling apparatuses according to one or more embodiments of the present invention include first and second load detection units (not shown) for detecting a load of each of the first and second compressors by using the compressor motor current, the compressor motor voltage, and the first and second strokes. The controller 50 may simultaneously or separately operate the first and second compressors based on a load with respect to the first and second compressors.

The size of the load of the compressors may be detected by using, for example, a phase difference between the motor current and the stroke estimate value, and a phase difference between the motor voltage and the stroke estimate value. Also, the size of the compressor load may be detected by using a gas spring constant Kg. Various springs are installed to elastically support the piston in a movement direction within the compressor when the piston reciprocally and linearly moves. In detail, a coil spring, a type of a mechanical spring, is installed to elastically support the hermetic container and the cylinder in the movement direction of the piston. Also, the refrigerant sucked into the compression space is operated by a gas spring. Here, the coil spring has a certain mechanical spring constant (Km), and the gas spring has a gas spring constant (Kg) varied according to a load. The natural frequency of the linear compressor is determined in consideration of the mechanical spring constant (Km) and the gas spring constant (Kg). A relationship between the natural frequency (fn), and the mechanical and gas spring constants (Km and Kg) is expressed by Equation 2 shown below:

[Equation 2]

$$f_n = \frac{1}{2\pi}\sqrt{\frac{K_m + K_g}{M}}$$

Here, fn is the natural frequency of the piston, Km is the mechanical spring constant, Kg is the gas spring constant, and M is the mass of the piston.

The gas spring constant can be calculated as expressed by Equation 3 shown below based on the motor current and the stroke estimate value.

[Equation 3]

$$K_g = \alpha\left|\frac{I(j\omega)}{X(j\omega)}\right|\cos(\theta_{i,x}) + M\omega^2 - K_m$$

Here, α is the motor constant, ω is the operation frequency, Km is the mechanical spring constant, Kg is the gas spring constant, M is the mass of the piston, $|I(j\omega)|$ is a current peak value of one period, and $|X(j\omega)|$ is a stroke peak value of one period.

In another example, the size of a compressor load may also be detected by using a gas damping constant Cg. The gas damping constant Cg can be calculated by using a phase difference between the stroke estimate value and the motor current (voltage) as expressed by Equation 4 shown below:

[Equation 4]

$$C_g = \frac{\alpha}{\omega}\left|\frac{I(j\omega)}{X(j\omega)}\right|\sin(\theta_{i,x})$$

Here, α is the motor constant, ω is the operation frequency, Cg is a gas damping constant, $|I(j\omega)|$ is a current peak value of one period, and $|X(j\omega)|$ is a stroke peak value of one period.

Also, the compressor controlling apparatuses according to one or more embodiments are able to control the operation frequency of each compressor. The controller 50 generates the control signal by using current operation frequencies of the first and second compressors and frequency reference values with respect to the current operation frequencies.

The first compressor C1 and the second compressor C2 are connected with two among the three inverter modules within the inverter 40. Namely, the first compressor C1 is connected with the switching elements S1, S2, S3, and S4, and the second compressor C2 is connected with the switching elements S3, S4, S5, and S6. Here, one of the three inverter modules is commonly connected with the first and second compressors. Namely, the switching elements S3 and S4 are commonly used by the first and second compressors.

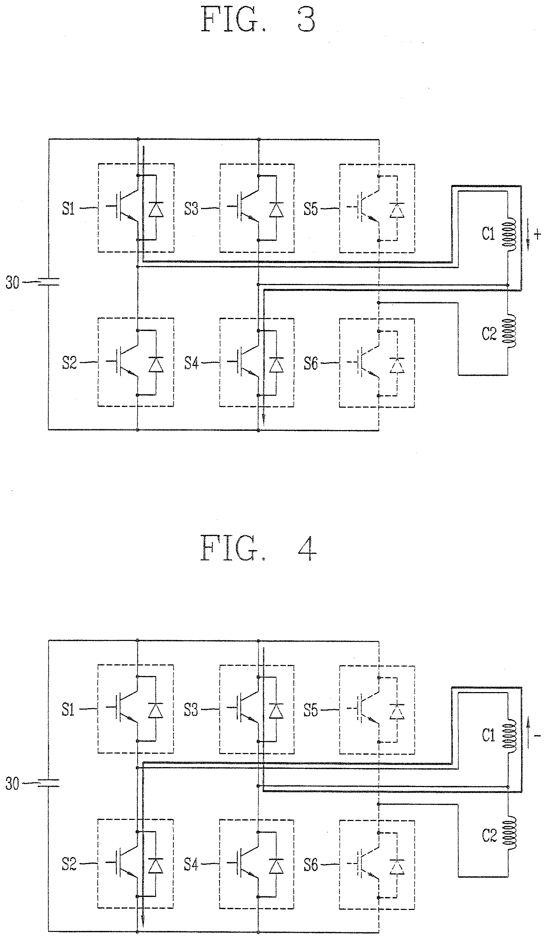

The controlling operation of the first compressor by using the switching elements S1, S2, S3, and S4 within the inverter 40 will now be described with reference to FIGS. 3 and 4. The first compressor C1 is connected with the switching elements S1, S2, S3, and S4 of the inverter 40. When the controller 50 generates a control signal for operating only the first compressor according to a compressor operation mode, the switching elements are driven according to the control signal. With reference to FIG. 3, a positive (+) current of the first compressor flows through the switching elements S1 and S4. Meanwhile, with reference to FIG. 4, a negative (-) current of the first compressor flows through the switching elements S2 and S3.

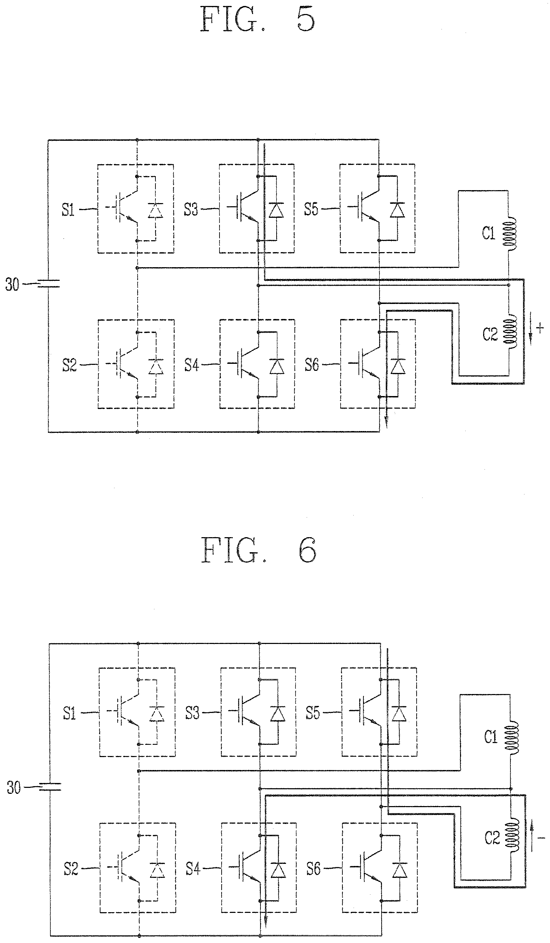

The controlling operation of the second compressor by using the switching elements S3, S4, S5, and S6 within the inverter 40 will now be described with reference to FIGS. 5 and 6. The second compressor C2 is connected with the switching elements S3, S4, S5, and S6 of the inverter 40. When the controller 50 generates a control signal for operating only the second compressor according to a compressor operation mode, the switching elements are driven according to the control signal. With reference to FIG. 5, a positive (+) current of the first compressor flows through the switching elements S3 and S6. Meanwhile, with reference to FIG. 6, a negative (-) current of the first compressor flows through the switching elements S4 and S5.

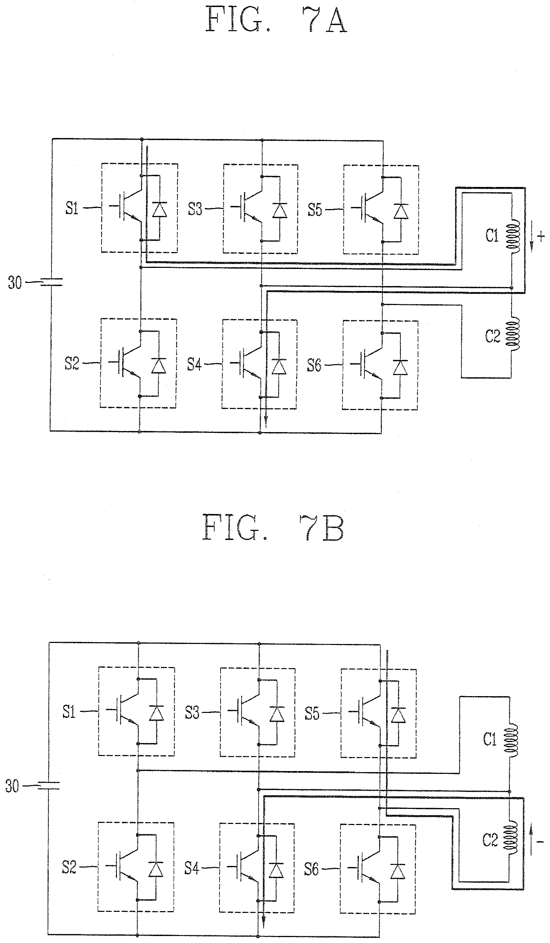

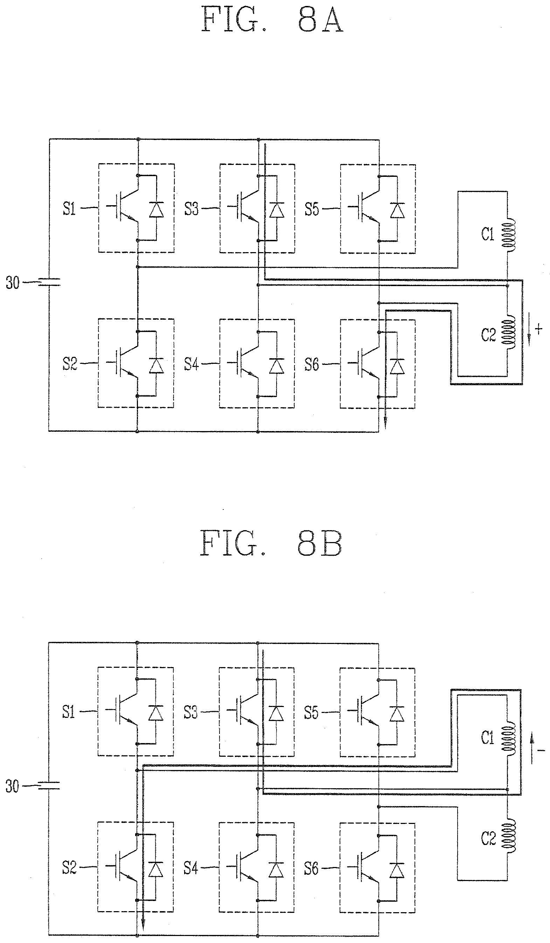

The controlling operation of the first and second compressors by using the switching elements S1, S2, S3, S4, S5, and S6 of the inverter 40 will now be described with reference to FIGS. 7A through 8B. Controlling of the positive (+) directional current of the first compressor C1 is performed by the switching element S1 (FIG. 7A), and controlling of the negative (-) directional current of the second compressor C2 is performed by the switching element S5 (FIG. 7B). Here, a common current flows through the switching element S4. Meanwhile, controlling of the negative (-) directional current of the first compressor C1 is performed by the switching element S2 (FIG. 8B), and controlling of the positive (+) directional current of the second compressor C2 is performed by the switching element S6 (FIG. 8A). Here, a common current flows through the switching element S3. Namely, as shown in FIGS. 7 and 8, the current directions flowing across the first and second compressors C1 and C2 are the opposite.

The current flows or controlling of the operation of the first and second compressors in FIGS. 3 through 8B may vary according to wirings (or connections) between the motors within the compressors and the switching elements within the inverter.

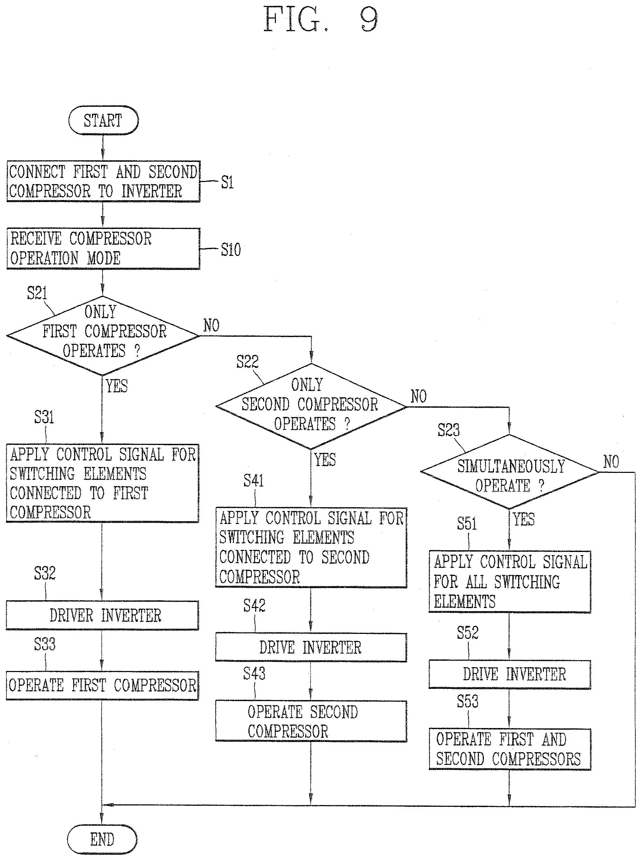

With reference to FIG. 9, in a compressor controlling method according to an embodiment of the present invention, the first and second compressors are controlled by using the inverter. The controlling method includes step (S10) of receiving a compressor operation mode and step (S21 to S53) of driving some or the entirety of the switching elements within the single inverter according to the compressor operation mode. Here, the compressor operation mode is an operation mode determined by a load of the first and second compressors, a required cooling capacity, or the like. In the compressor operation mode, the amount of compression, or the like, of each compressor may be controlled. The compressor operation mode may be simply divided into a mode for operating only the first compressor, a mode for operating only the second compressor, and a mode for simultaneously operating both the first and second compressors. The configuration of the apparatus hereinafter is referred to FIGS. 1 and 2.

The driving step may include steps (S31, S41, and S51) of inputting a control signal to some or the entirety of the switching elements within the single inverter and driving them. Also, the driving step may further include steps (S33, S43, and S53) of controlling the operation of the first compressor, the second compressor, or both first and second compressors connected to the driven switching elements.

First, the first and second compressors and the switching elements within the single inverter are connected (S1). The current flows or controlling of the operation of the first and second compressors in FIGS. 3 through 8B may vary according to wirings (or connections) between the motors within the compressors and the switching elements within the inverter. Next, whether to operate only the first compressor, whether to operate only the second compressor, or whether to simultaneously operate both the first and second compressors is determined according to a compressor operation mode (S21, S22, S23).

The controlling operation of the first compressor by using the switching elements S1, S2, S3, and S4 within the inverter 40 will now be described with reference to FIGS. 3 and 4 (S21). The first compressor C1 is connected with the switching elements S1, S2, S3, and S4 of the inverter 40. When the controller 50 generates a control signal for operating only the first compressor according to a compressor operation mode (231), the switching elements are driven according to the control signal (S32). With reference to FIG. 3, a positive (+) current of the first compressor flows through the switching elements S1 and S4. Meanwhile, with reference to FIG. 4, a negative (-) current of the first compressor flows through the switching elements S2 and S3.

The controlling operation of the second compressor by using the switching elements S3, S4, S5, and S6 within the inverter 40 will now be described with reference to FIGS. 5 and 6 (S22). The second compressor C2 is connected with the switching elements S3, S4, S5, and S6 of the inverter 40. When the controller 50 generates a control signal for operating only the second compressor according to a compressor operation mode (S41), the switching elements are driven according to the control signal (S42). With reference to FIG. 5, a positive (+) current of the first compressor flows through the switching elements S3 and S6. Meanwhile, with reference to FIG. 6, a negative (-) current of the first compressor flows through the switching elements S4 and S5.

The controlling operation of the first and second compressors by using the switching elements S1, S2, S3, S4, S5, and S6 of the inverter 40 will now be described with reference to FIGS. 7A through 8B. Controlling of the positive (+) directional current of the first compressor C1 is performed by the switching element S1 (FIG. 7A), and controlling of the negative (-) directional current of the second compressor C2 is performed by the switching element S5 (FIG. 7B). Here, a common current flows through the switching element S4. Meanwhile, controlling of the negative (-) directional current of the first compressor C1 is performed by the switching element S2 (FIG. 8B), and controlling of the positive (+) directional current of the second compressor C2 is performed by the switching element S6 (FIG. 8A). Here, a common current flows through the switching element S3. Namely, as shown in FIGS. 7 and 8, the current directions flowing across the first and second compressors C1 and C2 are the opposite.

As described above, since the operation of two compressors is controlled by using a single inverter, the use of elements is minimized, the compressor capacity can be increased, and the operation efficiency of the system can be enhanced. Also, a plurality of operation modes can be used according to a load or cooling capacity by using two compressors. in addition, since two compressors are separately or simultaneously operated by using the single inverter, the configuration of the system can be simplified.

Furthermore, the embodiments of the disclosure have been described with the inverter and the controller being separate units. However, in another embodiment, the inverter and the controller may be a single unit. For example, the inverter and the controller may be formed using a custom semiconductor chip, application specific integrated circuit (ASIC), field programmable gate array (FPGA), and the like.

The controller may be a microprocessor, a circuit formed using logic gates, or any suitable processing module using hardware, software, and combination thereof.

## Claims

1. A machine comprising:

   a first compressor (C1);
   a second compressor (C2); and
   a compressor controlling apparatus,
   **characterized in that** the compressor controlling apparatus includes,
   a single inverter (40) including a plurality of switching elements (S1, S2, S3, S4, S5, S6) to switch direct current (DC) power into driving power for at least one of the first compressor (C1) and the second compressor (C2) according to a control signal; and
   a controller (50) to generate the control signal for switching the plurality of switching elements (S1, S2, S3, S4, S5, S6) and output the control signal to the inverter (40),
   wherein the first and second compressors (C1, C2) are configured to be simultaneously operated or separately operated based on the control signal,
   wherein the first and second compressors (C1, C2) are connected to the single inverter (40),
   wherein some of the plurality of switching elements (S1, S2, S3, S4, S5, S6) of the single inverter (40) are configured to be controlled based on the control signal when the first and second compressors (C1, C2) are separately operated.

2. The machine of claim 1, further comprising:

   first and second current detectors (81, 84) to detect a compressor motor current applied to motors provided in the respective first and second compressors (C1, C2); and
   first and second voltage detectors (82, 85) to detect a compressor motor voltage applied to the respective motors.

3. The machine of claim 1 or 2, wherein the first and second compressors (C1, C2) are reciprocating compressors, the machine further comprising:

   first and second stroke calculators (83, 86) to calculate first and second strokes of the first and second reciprocating compressors by using the respective compressor motor current and compressor motor voltage.

4. The machine of claim 3, wherein the controller (50) generates the control signal by using the first stroke and a stroke reference value ($X_1$, $X_{ref1}$) with respect to the first reciprocating compressor.

5. The machine of claim 3 or 4, wherein the controller (50) generates the control signal by using the second stroke and a stroke reference value ($X_2$, $X_{ref2}$) with respect to the second reciprocating compressor.

6. The machine of one of claims 3 to 5, further comprising:

   first and second load detectors to detect a load with respect to the first and second reciprocating compressors by using the compressor motor current, the compressor motor voltage, or the first and second strokes ($X_1$, $X_2$).

7. The machine of claim 6, further comprising:

   first and second load detectors to detect a load with respect to each of the first and second reciprocating compressors by using the compressor motor current, the compressor motor voltage, or the first and second strokes ($X_1$, $X_2$).

8. The machine of claim 1 or 2, further comprising:

   first and second load detectors, wherein both of the first and second compressors (C1, C2) are simultaneously operated or the first and second compressors (C1, C2) are separately operated based on the loads with respect to the first and second compressors (C1, C2) detected by the first and second load detectors.

9. The machine of one of claims 1 to 8, wherein the controller (50) generates the control signal by using current operation frequencies of the first and second compressors (C1, C2) and frequency reference values with respect to the current operation frequencies.

10. The machine of one of claims 1 to 9, wherein the inverter (40) includes at least three inverter modules and the first and second compressors (C1, C2) are connected with two of the at least three inverter modules respectively.

11. The machine of claim 10, wherein one of the at least three inverter modules is commonly connected with the first and second compressors (C1, C2).

12. The machine of one of claims 1 to 11, further comprising:

   a converter to convert alternating current (AC) power into direct current (DC) power; and
   a smoothing unit to smooth the DC power,
   wherein the inverter (40) converts the smoothed DC power into the driving power according to the driving signal that activates one or more switching elements (S1, S2, S3, S4, S5, S6) in the at least one or more of the plurality of inverter modules to output the driving power

13. The machine of one of claims 1 to 12, the compressor controlling apparatus further comprising:

a driving unit switched according to a control signal to generate the driving signal that activates one or more of the respective switching elements (S1, S2, S3, S4, S5, S6).

14. A compressor controlling method for controlling first and second compressors (C1, C2) of a machine by using a single inverter (40) of a compressor controlling apparatus,
**characterized in that** the method comprising:

receiving a compressor operation mode; and driving the first compressor (C1), the second compressor (C2), or both the first and second compressors (C1, C2) according to the compressor operation mode,
wherein the first and second compressors (C1, C2) are connected to the single inverter (40),
wherein some of a plurality of switching elements (S1, S2, S3, S4, S5, S6) of the single inverter (40) are controlled based on the control signal generated by a controller (50) when the first and second compressors (C1, C2) are separately operated.

15. The method of claim 14, further comprising:

switching at least some of the switching elements (S1, S2, S3, S4, S5, S6) of the inverter (40) when the compressor operation mode is an operation of the first compressor (C1);
switching at least some of the switching elements (S1, S2, S3, S4, S5, S6) of the inverter (40) when the compressor operation mode is an operation of the second compressor (C2); and switching all of the switching elements (S1, S2, S3, S4, S5, S6) of the inverter (40) when the compressor operation mode is an operation of the first and second compressors (C1, C2), wherein at least one of the switching elements (S1, S2, S3, S4, S5, S6) are commonly connected to the first and second compressors (C1, C2).

**Patentansprüche**

1. Maschine, die aufweist:

einen ersten Kompressor (C1), einen zweiten Kompressor (C2) und eine Kompressorsteuervorrichtung, **dadurch gekennzeichnet, dass** die Kompressorsteuervorrichtung aufweist:

einen einzelnen Wechselrichter (40), der mehrere Schaltelemente (S1, S2, S3, S4, S5, S6) zum Schalten von Gleichstrom(DC)-Leistung in Antriebsleistung für wenigstens einen vom ersten Kompressor (C1) und vom zweiten Kompressor (C2) entsprechend einem Steuersignal aufweist, und
eine Steuereinrichtung (50) zum Erzeugen des Steuersignals zum Schalten der mehreren Schaltelemente (S1, S2, S3, S4, S5, S6) und zum Ausgeben des Steuersignals an den Wechselrichter (40),
wobei der erste und der zweite Kompressor (C1, C2) dafür ausgelegt sind, auf der Grundlage des Steuersignals gleichzeitig oder getrennt betrieben zu werden,
wobei der erste und der zweite Kompressor (C1, C2) mit dem einzelnen Wechselrichter (40) verbunden sind,
wobei einige von den mehreren Schaltelementen (S1, S2, S3, S4, S5, S6) des einzelnen Wechselrichters (40) dafür ausgelegt sind, auf der Grundlage des Steuersignals gesteuert zu werden, wenn der erste und der zweite Kompressor (C1, C2) getrennt betrieben werden.

2. Maschine nach Anspruch 1, die ferner aufweist:

einen ersten und einen zweiten Stromdetektor (81, 84) zum Detektieren eines Kompressormotorstroms, der Motoren zugeführt wird, die im ersten bzw. im zweiten Kompressor (C1, C2) bereitgestellt sind, und
einen ersten und einen zweiten Spannungsdetektor (82, 85) zum Detektieren einer an die jeweiligen Motoren angelegten Kompressormotorspannung.

3. Maschine nach Anspruch 1 oder 2, wobei der erste und der zweite Kompressor (C1, C2) Kolbenkompressoren sind, wobei die Maschine ferner aufweist:

eine erste und eine zweite Hubberechnungseinrichtung (83, 86) zum Berechnen des ersten und des zweiten Hubs des ersten und des zweiten Kolbenkompressors unter Verwendung des jeweiligen Kompressormotorstroms und der jeweiligen Kompressormotorspannung.

4. Maschine nach Anspruch 3, wobei die Steuereinrichtung (50) das Steuersignal unter Verwendung des ersten Hubs und eines Hubreferenzwerts $(X_1, X_{ref1})$ in Bezug auf den ersten Kolbenkompressor erzeugt.

**5.** Maschine nach Anspruch 3 oder 4, wobei die Steuereinrichtung (50) das Steuersignal unter Verwendung des zweiten Hubs und eines Hubreferenzwerts $(X_2, X_{ref2})$ in Bezug auf den zweiten Kolbenkompressor erzeugt.

**6.** Maschine nach einem der Ansprüche 3 bis 5, die ferner aufweist:

einen ersten und einen zweiten Lastdetektor zum Detektieren einer Last in Bezug auf den ersten und den zweiten Kolbenkompressor unter Verwendung des Kompressormotorstroms, der Kompressormotorspannung oder des ersten und des zweiten Hubs $(X_1, X_2)$.

**7.** Maschine nach Anspruch 6, die ferner aufweist:

einen ersten und einen zweiten Lastdetektor zum Detektieren einer Last in Bezug auf jeden vom ersten und zweiten Kolbenkompressor unter Verwendung des Kompressormotorstroms, der Kompressormotorspannung oder des ersten und des zweiten Hubs $(X_1, X_2)$.

**8.** Maschine nach Anspruch 1 oder 2, die ferner aufweist:

einen ersten und einen zweiten Lastdetektor, wobei auf der Grundlage der Lasten in Bezug auf den ersten und den zweiten Kompressor (C1, C2), die durch den ersten und den zweiten Lastdetektor detektiert wurden, sowohl der erste als auch der zweite Kompressor (C1, C2) gleichzeitig betrieben werden oder der erste und der zweite Kompressor (C1, C2) getrennt betrieben werden.

**9.** Maschine nach einem der Ansprüche 1 bis 8, wobei die Steuereinrichtung (50) das Steuersignal unter Verwendung aktueller Betriebsfrequenzen des ersten und des zweiten Kompressors (C1, C2) und Frequenzreferenzwerte in Bezug auf die aktuellen Betriebsfrequenzen erzeugt.

**10.** Maschine nach einem der Ansprüche 1 bis 9, wobei der Wechselrichter (40) wenigstens drei Wechselrichtermodule aufweist und der erste und der zweite Kompressor (C1, C2) jeweils mit zwei der wenigstens drei Wechselrichtermodule verbunden sind.

**11.** Maschine nach Anspruch 10, wobei eines der wenigstens drei Wechselrichtermodule mit dem ersten und dem zweiten Kompressor (C1, C2) gemeinsam verbunden ist.

**12.** Maschine nach einem der Ansprüche 1 bis 11, die ferner aufweist:

einen Wandler zum Umwandeln einer Wechselstrom(AC)-Leistung in eine Gleichstrom(DC)-Leistung und eine Glättungseinheit zum Glätten der Gleichstromleistung, wobei der Wechselrichter (40) die geglättete Gleichstromleistung entsprechend dem Antriebssignal, das ein oder mehrere Schaltelemente (S1, S2, S3, S4, S5, S6) in dem wenigstens einen von den mehreren Wechselrichtermodulen aktiviert, um die Antriebsleistung auszugeben, in die Antriebsleistung umwandelt.

**13.** Maschine nach einem der Ansprüche 1 bis 12, wobei die Kompressorsteuervorrichtung ferner aufweist:

eine Antriebseinheit, die entsprechend einem Steuersignal geschaltet wird, um das Antriebssignal zu erzeugen, das eines oder mehrere von den jeweiligen Schaltelementen (S1, S2, S3, S4, S5, S6) aktiviert.

**14.** Kompressorsteuerverfahren zum Steuern des ersten und des zweiten Kompressors (C1, C2) einer Maschine unter Verwendung eines einzelnen Wechselrichters (40) einer Kompressorsteuervorrichtung, **dadurch gekennzeichnet, dass** das Verfahren aufweist:

Empfangen eines Kompressorbetriebsmodus und Antreiben des ersten Kompressors (C1), des zweiten Kompressors (C2) oder sowohl des ersten als auch des zweiten Kompressors (C1, C2) entsprechend dem Kompressorbetriebsmodus, wobei der erste und der zweite Kompressor (C1, C2) mit dem einzelnen Wechselrichter (40) verbunden werden, wobei einige von mehreren Schaltelementen (S1, S2, S3, S4, S5, S6) des einzelnen Wechselrichters (40) auf der Grundlage des Steuersignals gesteuert werden, das von einer Steuereinrichtung (50) erzeugt wird, wenn der erste und der zweite Kompressor (C1, C2) getrennt betrieben werden.

**15.** Verfahren nach Anspruch 14, das ferner aufweist:

Schalten wenigstens einiger der Schaltelemente (S1, S2, S3, S4, S5, S6) des Wechselrichters (40), wenn der Kompressorbetriebsmodus ein Betrieb des ersten Kompressors (C1) ist, Schalten wenigstens einiger der Schaltelemente (S1, S2, S3, S4, S5, S6) des Wechselrichters (40), wenn der Kompressorbetriebsmodus ein Betrieb des zweiten Kompressors (C2) ist, und Schalten aller Schaltelemente (S1, S2, S3, S4, S5, S6) des Wechselrichters (40), wenn der Kompressorbetriebsmodus ein Betrieb des ersten und des zweiten Kompressors (C1, C2) ist, wobei wenigstens eines der Schaltelemente (S1, S2, S3, S4, S5, S6) gemeinsam mit dem ersten und dem zweiten Kompressor (C1, C2) verbunden wird.

**Revendications**

1. Machine comprenant :

    un premier compresseur (C1) ;
    un second compresseur (C2) ; et
    **caractérisée en ce que** l'appareil de commande de compresseur inclut
    un seul convertisseur (40) incluant une pluralité d'éléments de commutation (S1, S2, S3, S4, S5, S6) pour commuter une puissance de courant continu (CC) en puissance motrice pour au moins un du premier compresseur (C1) et du second compresseur (C2) selon un signal de commande ; et
    un élément de commande (50) pour générer le signal de commande pour commuter la pluralité d'éléments de commutation (S1, S2, S3, S4, S5, S6) et émettre le signal de commande au convertisseur (40),
    dans laquelle les premier et second compresseurs (C1, C2) sont configurés pour être actionnés simultanément ou actionnés séparément sur la base du signal de commande,
    dans laquelle les premier et second compresseurs (C1, C2) sont reliés au seul convertisseur (40),
    dans laquelle certains de la pluralité d'éléments de commutation (S1, S2, S3, S4, S5, S6) du seul convertisseur (40) sont configurés pour être commandés sur la base du signal de commande lorsque les premier et second compresseurs (C1, C2) sont actionnés séparément.

2. Machine selon la revendication 1, comprenant en outre :

    des premier et second détecteurs de courant (81, 84) pour détecter un courant de moteur de compresseur appliqué aux moteurs pourvus dans les premier et second compresseurs respectifs (C1, C2) ; et
    des premier et second détecteurs de tension (82, 85) pour détecter une tension de moteur de compresseur appliquée aux moteurs respectifs.

3. Machine selon la revendication 1 ou 2, dans laquelle les premier et second compresseurs (C1, C2) sont des compresseurs alternatifs, la machine comprenant en outre :

    des premier et second calculateurs de course (83, 86) pour calculer des première et seconde courses des premier et second compresseurs alternatifs par utilisation du courant de moteur de compresseur respectif et de la tension de moteur de compresseur.

4. Machine selon la revendication 3, dans laquelle l'élément de commande (50) génère le signal de commande par utilisation de la première course et une valeur de référence de course ($X_1$, $X_{ref1}$) par rapport au premier compresseur alternatif.

5. Machine selon la revendication 3 ou 4, dans laquelle l'élément de commande (50) génère le signal de commande par utilisation de la seconde course et une valeur de référence de course ($X_2$, $X_{ref2}$) par rapport au second compresseur alternatif.

6. Machine selon l'une des revendications 3 à 5, comprenant en outre :

    des premier et second détecteurs de charge pour détecter une charge par rapport aux premier et second compresseurs alternatifs par utilisation du courant de moteur de compresseur, de la tension de moteur de compresseur ou des première et seconde courses ($X_1$, $X_2$).

7. Machine selon la revendication 6, comprenant en outre :

    des premier et second détecteurs de charge pour détecter une charge par rapport à chacun des premier et second compresseurs alternatifs par utilisation du courant de moteur de compresseur, de la tension de moteur de compresseur ou des première et seconde courses ($X_1$, $X_2$).

8. Machine selon la revendication 1 ou 2, comprenant en outre :

    des premier et second détecteurs de charge, dans laquelle les deux des premier et second compresseurs (C1, C2) sont simultanément actionnés ou les premier et second compresseurs (C1, C2) sont actionnés séparément sur la base des charges par rapport aux premier et second compresseurs (C1, C2) détectés par les premier et second détecteurs de charge.

9. Machine selon l'une des revendications 1 à 8, dans laquelle l'élément de commande (50) génère le signal de commande par utilisation des fréquences d'actionnement actuelles des premier et second compresseurs (C1, C2) et des valeurs de référence de fréquence par rapport aux fréquences d'actionnement actuelles.

**10.** Machine selon l'une des revendications 1 à 9, dans laquelle le convertisseur (40) inclut au moins trois modules de convertisseur et les premier et second compresseurs (C1, C2) sont reliés respectivement à deux des au moins trois modules de convertisseur.

**11.** Machine selon la revendication 10, dans laquelle un des au moins trois modules de convertisseur est relié communément aux premier et second compresseurs (C1, C2).

**12.** Machine selon l'une des revendications 1 à 11, comprenant en outre :

un convertisseur pour convertir une puissance de courant alternatif (CA) en puissance de courant continu (CC) ; et
une unité de lissage pour lisser la puissance de courant continu,
dans laquelle le convertisseur (40) convertit la puissance de courant continu lissée en puissance motrice selon le signal d'entraînement qui active un ou plusieurs éléments de commutation (S1, S2, S3, S4, S5, S6) dans l'au moins un ou plusieurs de la pluralité de modules de convertisseur pour sortir la puissance motrice.

**13.** Machine selon l'une des revendications 1 à 12, l'appareil de commande de compresseur comprenant en outre :

une unité d'entraînement commutée selon un signal de commande pour générer le signal d'entraînement qui active un ou plusieurs des éléments de commutation respectifs (S1, S2, S3, S4, S5, S6).

**14.** Procédé de commande de compresseur pour commander des premier et second compresseurs (C1, C2) d'une machine par utilisation d'un seul convertisseur (40) d'un appareil de commande de compresseur,
**caractérisé en ce que** le procédé comprend :

la réception d'un mode de fonctionnement de compresseur ; et
l'entraînement du premier compresseur (C1), du second compresseur (C2) ou des deux premier et second compresseurs (C1, C2) selon le mode de fonctionnement de compresseur,
dans lequel les premier et second compresseurs (C1, C2) sont reliés au seul convertisseur (40),
dans lequel certains d'une pluralité d'éléments de commutation (S1, S2, S3, S4, S5, S6) du seul convertisseur (40) sont commandés sur la base du signal de commande généré par un élément de commande (50) lorsque les premier et second compresseurs (C1, C2) sont séparément actionnés.

**15.** Procédé selon la revendication 14, comprenant en outre :

la commutation d'au moins certains des éléments de commutation (S1, S2, S3, S4, S5, S6) du convertisseur (40) lorsque le mode de fonctionnement de compresseur est un fonctionnement du premier compresseur (C1);
la commutation d'au moins certains des éléments de commutation (S1, S2, S3, S4, S5, S6) du convertisseur (40) lorsque le mode de fonctionnement de compresseur est un fonctionnement du second compresseur (C2) ; et
la commutation de tous les éléments de commutation (S1, S2, S3, S4, S5, S6) du convertisseur (40) lorsque le mode de fonctionnement de compresseur est un fonctionnement des premier et second compresseurs (C1, C2), dans lequel au moins un des éléments de commutation (S1, S2, S3, S4, S5, S6) est relié communément aux premier et second compresseurs (C1, C2).

# FIG. 1

# FIG. 2

FIG. 3

FIG. 4

# FIG. 5

# FIG. 6

# FIG. 7A

# FIG. 7B

# FIG. 8A

# FIG. 8B

# FIG. 9

```
                    ┌─────────┐
                    │  START  │
                    └─────────┘
                         │
        ┌────────────────────────────────┐
        │ CONNECT FIRST AND SECOND        │── S1
        │ COMPRESSOR TO INVERTER          │
        └────────────────────────────────┘
                         │
        ┌────────────────────────────────┐
        │ RECEIVE COMPRESSOR              │── S10
        │ OPERATION MODE                  │
        └────────────────────────────────┘
                         │
   S21                   ▼
        ╱────────────────────╲       NO
       ╱  ONLY                ╲───────────────────┐
       ╲  FIRST COMPRESSOR    ╱                   │
        ╲  OPERATES ?        ╱                    │
         ╲──────────────────╱          S22        ▼
                 │YES                ╱───────────────────╲    NO
                 │                  ╱  ONLY               ╲──────────┐
   S31           │                  ╲ SECOND COMPRESSOR  ╱          │
        ┌──────────────────────┐     ╲ OPERATES ?       ╱   S23     ▼
        │ APPLY CONTROL SIGNAL  │      ╲───────────────╱      ╱───────────────╲  NO
        │ FOR SWITCHING         │            │YES            ╱ SIMULTANEOUSLY  ╲───┐
        │ ELEMENTS CONNECTED    │  S41        │              ╲  OPERATE ?     ╱    │
        │ TO FIRST COMPRESSOR   │  ┌──────────────────────┐   ╲─────────────╱     │
        └──────────────────────┘  │ APPLY CONTROL SIGNAL  │  S51    │YES         │
                 │                 │ FOR SWITCHING         │  ┌──────────────────┐│
   S32           │                 │ ELEMENTS CONNECTED    │  │ APPLY CONTROL     ││
        ┌──────────────────────┐   │ TO SECOND COMPRESSOR  │  │ SIGNAL FOR ALL    ││
        │   DRIVER INVERTER     │   └──────────────────────┘  │ SWITCHING ELEMENTS││
        └──────────────────────┘  S42        │                └──────────────────┘│
   S33           │                 ┌──────────────────────┐  S52    │             │
        ┌──────────────────────┐   │    DRIVE INVERTER     │  ┌──────────────────┐│
        │ OPERATE FIRST         │   └──────────────────────┘  │  DRIVE INVERTER   ││
        │ COMPRESSOR            │  S43        │                └──────────────────┘│
        └──────────────────────┘   ┌──────────────────────┐  S53    │             │
                 │                  │ OPERATE SECOND        │  ┌──────────────────┐│
                 │                  │ COMPRESSOR            │  │ OPERATE FIRST AND ││
                 │                  └──────────────────────┘  │ SECOND COMPRESSORS││
                 │                             │              └──────────────────┘│
                 └───────────────────────────────────────────────────────────────┘
                         │
                    ┌─────────┐
                    │   END   │
                    └─────────┘
```

**EP 2 535 586 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070056300 A1
- GB 2246451 A

- US 20050123407 A1